# FASCICULE DE BREVET EUROPEEN

(11) **EP 1 195 146 B1**
(45) Date de publication et mention de la délivrance du brevet: **23.03.2005**
(21) Numéro de dépôt: 00203516.0
(22) Date de dépôt: 09.10.2000
(51) Int. Cl.: A61C 8/00, A61C 1/08

(54) **Nécessaire adaptée à la mise en place d'un implant dentaire**
Set für die Implantation eines Zahnimplantates
Kit for the implantation of a dental implant

(43) Date de publication de la demande: 10.04.2002
(73) Titulaire: Martin, Jean-Paul, 13007 Marseille (FR); Heraud, Jean, 13007 Marseille (FR)
(72) Inventeur: Martin, Jean-Paul, 13007 Marseille (FR); Heraud, Jean, 13007 Marseille (FR)
(74) Mandataire: Vandeberg, Marie-Paule L.G.

(56) Documents cités:
- EP-A- 0 412 845
- DE-A- 19 741 087
- US-A- 4 846 683
- US-A- 5 116 226
- US-A- 5 759 033
- US-A- 5 797 741
- PATENT ABSTRACTS OF JAPAN vol. 1995, no. 11, 26 décembre 1995 (1995-12-26) -& JP 07 222752 A (TERUMO CORP), 22 août 1995 (1995-08-22)

## Description

L'invention concerne les implants dentaires.

Un implant dentaire est l'équivalent prothétique de la racine d'une dent. Sans qu'il y paraisse, la racine d'une dent est dotée, sous un très faible volume, de propriétés étonnantes. Elle doit pouvoir subir des contraintes de l'ordre de dix à trente kg par cm², son matériau doit être à même de résister aux contraintes mécaniques engendrées par la mastication.

La racine sert en fait à transmettre les efforts masticatoires des muscles à la couronne dentaire via les os maxillaires. Le contact entre l'assise osseuse et la racine a donc une importance déterminante. Le problème est qu'un os n'est pas une structure homogène : sous ses parois corticales très résistantes s'étend sa zone médullaire, d'aspect spongieux, qui offre une assise mécanique négligeable pour un implant. Un implant dentaire doit donc impérativement traverser la zone médullaire pour s'ancrer fermement dans les parois corticales. Les implants dentaires actuels nécessitent donc au moins 8 à 15 mm de structure osseuse pour être mis en place. Cette mise en place se fait par vissage, après forage de l'os maxillaire inférieur ou supérieur.

Cette technique n'est cependant applicable que pour les patients présentant un support osseux suffisant, ce qui correspond à une classification SD 1 en implantologie.

Cette classification est basée sur la hauteur du plancher du sinus maxillaire dans la technique d'implants bicorticaux; SD1 correspond à une hauteur de plancher supérieur à 10mm.

Suivant la même classification, SD2 correspond à une hauteur de plancher comprise entre 8 et 10mm, SD3 entre 5 et 8mm, SD4 entre 0 et 5mm (ce qui requiert un comblement) .

En outre, après mise en place du support de l'implant, on attend généralement près de cinq mois avant de pouvoir mettre la couronne dentaire en charge.

On connaît par EP- 336 082 un pivot dentaire à pas de vis servant à fixer une couronne dans la racine d'une dent. Des orifices sont prévus dans le pivot pour injecter un ciment axialement. Une telle technique n'est toutefois pas transposable au maxillaire.

EP-A-0 412 845 décrit un implant muni de projections circulaires et muni d'une perforation transversale pour implantations classiques, qu'on peut considéré comme le plus proche de l'implant inclus dans la présente invention.

US-A-5, 797, 741 décrit une méthode d'implantation par clavettage.

Un guide de forage à table coulissante est fixé par vissage sur l'implant.

Après perforation latérale du maxillaire, une à deux clavettes introduites transversalement immobilisent l'implant.

L'os alvéolaire a pour rôle le soutien des dents. Lorsque celles-ci disparaissent, l'os, qui a perdu sa fonction propre, se résorbe. L'os peut également se dégrader (pour d'autres raisons (affections diverses, tumeurs, etc.).
Pour les personnes correspondant à des stades de détérioration plus élevés (SD 2, SD 3 et SD 4) les parties corticales du support osseux ne présentent plus une épaisseur suffisante pour la mise en place d'un implant. Dans ce cas, on réalise une greffe osseuse dans le sinus maxillaire pour augmenter l'épaisseur du support osseux. On utilise comme greffons des esquilles d'os prélevées sur le patient lui-même. Après ossification (qui prend elle-même, généralement, de l'ordre de 5 mois), on peut placer un implant selon les principes décrits ci-dessus.

Le but de l'invention est de pouvoir traiter les stades SD2 ou supérieurs sans recourir à un traitement lourd. Un autre but de l'invention est de pouvoir obtenir une mise en charge immédiate de la dent implantée.

L'objet de l'invention est un nécessaire adapté à la mise en place d'un implant dentaire qui comprend :
- un implant tel que décrit ci-dessous,
- un fluide biocompatible durcissable;
- un dispositif de repérage de l'orifice latéral de l'implant comprenant une languette amovible solidarisable sur la tête de l'implant
- un dispositif d'injection à aiguille creuse permettant, l'implant étant en place, d'injecter le fluide biocompatible durcissable, au-travers de l'os, dans la cavité interne de l'implant par l'orifice latéral.
L'implant dentaire à ancrer dans une structure osseuse comprend une tête destinée à supporter une prothèse dentaire et une racine filetée en substance cylindrique, dans lequel la racine filetée présente une cavité interne et au moins un orifice latéral reliant cette cavité interne et la face latérale externe de la racine, la position axiale de cet orifice étant telle que lorsque l'implant est en position, cet au moins un orifice débouche sur une zone médullaire de la structure osseuse.

Les dimensions de cet au moins un orifice latéral permettent l'introduction par une aiguille creuse d'un matériau durcissable dans la cavité interne.

La cavité interne de l'implant peut aussi présenter un orifice axial à son extrémité distale.

Cet au moins un orifice latéral de l'implant présente de préférence une section ovale, le grand axe de cette section ovale s'étendant dans un plan perpendiculaire à l'axe de la racine.

La longueur axiale de l'implant est, de préférence, comprise entre 3 et 8 mm.
- le cas échéant, une spatule rétractable dans une aiguille creuse ; de préférence, l'aiguille creuse est en un métal à mémoire de forme, capable de passer d'une forme initiale droite à une forme courbée

D'autres particularités et avantages de l'invention ressortiront de la description ci-après de modes de réalisation particuliers, référence étant faite aux dessins, dans lesquels :
Les Fig. 1 à 3 sont des vues en perspectives de l'implant de l'invention;
Les Fig. 4, 5 et 7 sont des vues schématiques en perspective d'un implant de l'invention en cours de pose;
La Fig. 6 est une vue en coupe suivant le plan VI-VI de l'implant de la Fig. 4.
Les Fig. 8 et 9 sont des vues schématiques en perspective, avec arrachement, de deux stades de renforcement de la parois maxillaire pour un implant de l'invention.
Les Fig. 10 et 11 sont des vues schématiques d'une tête de spatule à lame escamotable suivant l'invention;

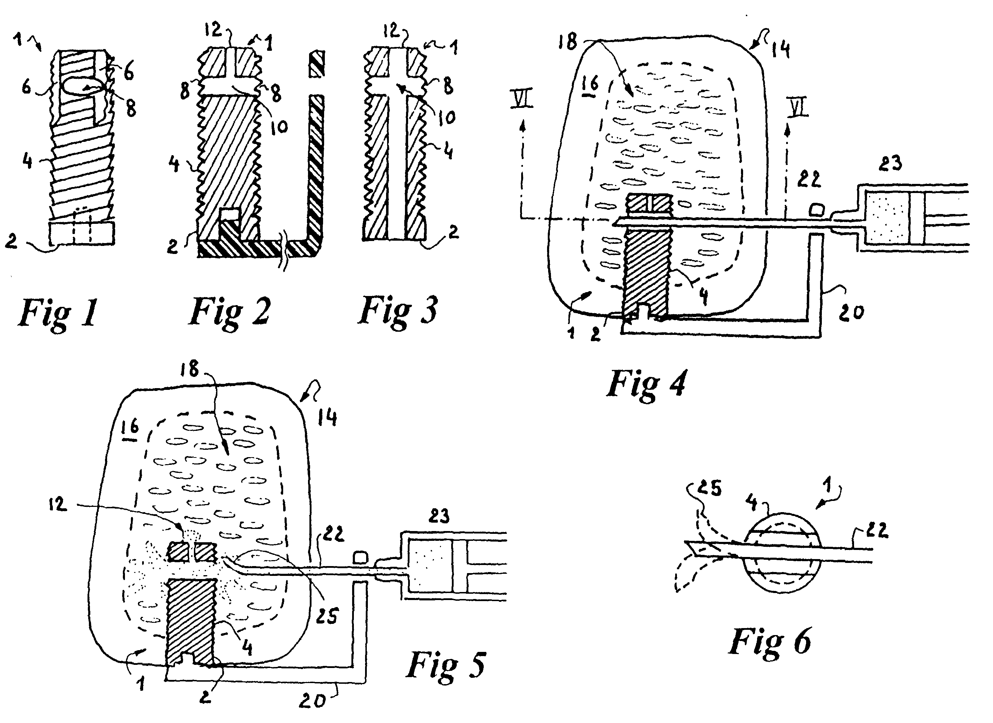

Les Fig. 1 a 3 montrent trois variantes possibles de 1' implant 1 de l'invention.

Cet implant présente une tête 2 classique, destinée à supporter une prothèse dentaire et une racine filetée 4 en substance cylindrique.

Une série de rainures longitudinales 6 ménagées le long de la racine permettent à l'implant de tarauder la paroi de l'alvéole pendant sa progression dans la structure osseuse.

Près de sa partie distale, la racine 4 est munie d'un orifice latéral 8 de forme sensiblement ovale qui débouche dans une cavité 10 de la racine 4, dont l'extrémité est donc creuse.

L'orifice latéral 8 peut déboucher à différents endroits de la racine 4 (voir Fig. 1 et 2). La racine 4 peut être munie d'un orifice axial 12 débouchant vers sa pointe.

La Fig. 4 montre l'implant 1 après son introduction dans un os maxillaire 14. Comme on peut le constater, la racine 4 traverse la paroi corticale 16 dure de l'os et plonge dans la zone médullaire 18, spongieuse, de l'os, qui contient la moelle. La position de l'orifice latéral 8 sur la racine 4 est telle que cet orifice 8 débouche dans cette zone médullaire 18 de l'os 14.

La Fig. 5 montre une phase ultérieure de la mise en place de l'implant 1 : un dispositif de repérage 20 indiquant la position angulaire de l'orifice latéral 8, (en l'occurrence une languette calibrée), a été clipsé sur la tête 2 de l'implant,. L'aiguille 22 d'un dispositif d'injection 23 a été introduite, en perforant l'os de la mâchoire, jusqu'à l'embouchure 8 de la cavité 10 de la racine 4. La présence de la languette de repérage 20 (en combinaison avec l'imagerie médicale) rend le pointage très sûr. A ce moment, on injecte au travers de l'aiguille un produit biocompatible durcissant 24 (ciment, polymérisant ou précipitant) dans l'implant 1. Cette injection est poursuivie jusqu'à ce que le produit durcissant 24, débordant de la cavité 10, remplisse le volume périprothétique, et les alvéoles médullaires adjacentes. L'expansion du produit 24 peut être favorisée en retirant progressivement l'aiguille tout en poursuivant l'injection, comme montré à la Fig. 5.

Après la prise complète du produit durcissant 24, l'implant 1 est solidement implanté dans l'os maxillaire 14 et peut être mis en charge sans délai.

La Fig. 6 est une vue en coupe transversale de l'implant 1. Comme représenté, l'aiguille 22 peut être une aiguille droite classique. Cependant, on peut également utiliser une aiguille courbe 25, ou, mieux encore, une aiguille à mémoire de forme dont la pointe se recourbe après son introduction. L'intérêt d'une aiguille courbe 25 est d'augmenter le volume d'injection du fluide durcissable des deux côtés de l'implant 1, jusqu'au bord controlatéral de la portée corticale de l'os, puis, par retrait de l'aiguille 22, 25 jusqu'au bord ipsilatéral au point d'entrée de l'aiguille 22, 25.

On a la possibilité d'injecter le fluide biocompatible durcissable par la lumière du trou prothétique qui peut être en communication avec l'apex de l'implant (voir la Fig. 2), ceci peut être réalisé par la tête de l'implant, par un embout prothétique placé sur cette tête ou par une aiguille mise en place à travers l'implant. Cette technique est intéressante au niveau mandibulaire.

Les avantages du présent implant sur les implants classiques sont multiples. En effet, il n'est plus nécessaire d'attendre plusieurs mois avant l'ossification complète de la zone périprothétique, ce qui abrège considérablement le calvaire des patients et supprime les interventions intermédiaires multiples avant la pose des couronnes sur l'implant.

En outre, le produit durcissant 24 est progressivement colonisé par l'organisme et remplacé par une assise osseuse solide.

Enfin, la longueur de l'implant est considérablement réduite (3 à 8 millimètres, en fonction de la hauteur disponible, contre 8 à 15 mm pour un implant classique), ce qui permet d'implanter des dents même chez des patients inopérables par les méthodes classiques.

Par ailleurs, si le patient présente une épaisseur d'os maxillaire 14 vraiment trop réduite il reste néanmoins possible de poser un implant 1 suivant l'invention en empiétant sur le volume des sinus maxillaires.

Avec un implant classique, cette méthode ne serait applicable qu'en introduisant une opération préparatoire très longue : dont l'ossification des greffons au revers de l'os maxillaire prendra près de 5 mois, jusqu'à l'obtention d'une paroi corticale suffisamment dure et stable pour y visser un implant.

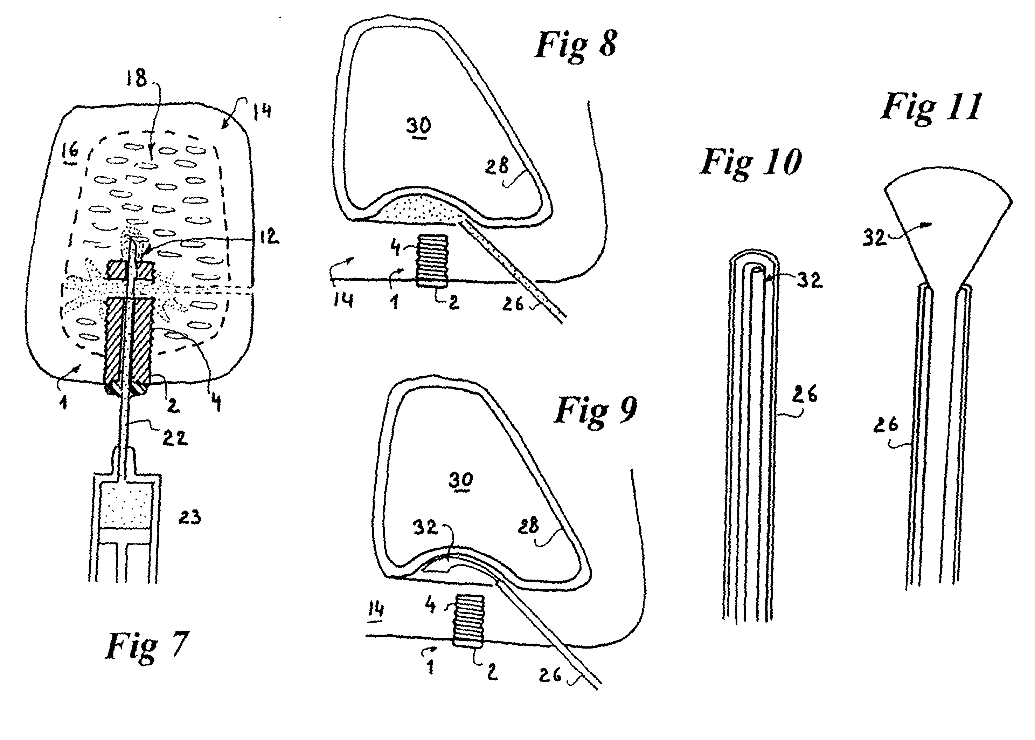

Les Fig. 8 et 9 montrent comment il est possible de renforcer la mâchoire au cours de la pose d'un implant de l'invention.

Une aiguille 26 est introduite sous contrôle d'imagerie au travers de l'os maxillaire 14 jusque sous la muqueuse 28 du sinus maxillaire 30 afin de décoller cette muqueuse 28. Le décollement est réalisé par une spatule à mémoire de forme décrite en référence aux Fig. 10 et 11. Cette aiguille 26 dont la pointe est en diamant ou autre est creuse et contient un mandrin 32 à mémoire de forme qui une fois sorti de l'aiguille se déploie pour former une spatule 26 permettant de décoller la muqueuse. Après repli de la spatule 26 et retrait du mandrin 32 à mémoire de forme, un ciment 24 de même composition que précédemment peut être injecté par l'aiguille 26 dans la poche formée entre la muqueuse 28 décollée et l'os maxillaire 14, ce qui permet de récupérer de la hauteur et de visser un implant 1 de taille plus importante.

On notera que la muqueuse 28 peut être décollée par injection d'un liquide, d'un gaz ou par décollement manuel, ou encore par injection directe du polymérisant ou du précipitant.

Avec la technique d'implants immobilisés par scellement, on peut envisager de traiter SA2, SA3, SA4, mais aussi des cas mandibulaires où l'ostéoporose a fait disparaître toute trace de trabéculation au niveau médulaire. Cette technique permettant l'immobilisation primaire (dès le premier temps chirurgical) de l'implant sans avoir un blocage bicortical; et donc une mise en charge immédiate de l'implant.

## Revendications

1. Un nécessaire adapté à la mise en place d'un implant dentaire qui comprend :
- un implant (1) dentaire (1) à ancrer dans une structure osseuse (14), comprenant une tête (2) destinée à supporter une prothèse dentaire et une racine (4) filetée en substance cylindrique dans lequel la racine filetée (4) présente une cavité interne (10) et au moins un orifice latéral (8) faisant déboucher cette cavité interne (10) sur la face latérale externe de la racine (4), la position axiale de cet orifice (8) étant telle que lorsque l'implant (1) est en position, cet au moins un orifice (8) débouche sur une zone médullaire (18) de la structure osseuse (14), les dimensions de cet au moins un orifice latéral (8) permettent l'introduction par une aiguille creuse (22) d'un matériau durcissable (24) dans la cavité interne (10).
- un fluide biocompatible durcissable (24) ;
- un dispositif de repérage (20) de l'orifice latéral de l'implant comprenant une languette amovible (20) solidarisable sur la tête de l'implant
- un dispositif d'injection à aiguille creuse permettant, l'implant (1) étant en place, d'injecter le fluide biocompatible durcissable (24), au-travers de l'os, dans la cavité interne (10) de l'implant par l'orifice latéral.

2. Un nécessaire adapté à la mise en place d'un implant dentaire suivant la revendication 1 **caractérisé en ce qu'**il comprend en outre:
- une spatule (32) rétractable dans une aiguille creuse (26).

3. Un nécessaire adapté à la mise en place d'un implant dentaire suivant l'une quelconque des revendication 1 ou 2 **caractérisé en ce que** l'aiguille creuse est en un métal à mémoire de forme, capable de passer d'une forme initiale droite à une forme courbée.

4. Un nécessaire adapté à la mise en place d'un implant dentaire suivant l'une quelconque des revendications 1 à 3 **caractérisé en ce que** la cavité interne (10) de l'implant présente un orifice axial (12) à son extrémité distale.

5. Un nécessaire adapté à la mise en place d'un implant dentaire suivant l'une quelconque des revendications précédentes **caractérisé en ce que** cet au moins un orifice latéral (8) de l'implant présente une section ovale, le grand axe de cette section s'étendant dans un plan perpendiculaire à l'axe de la racine (4) .

6. Un nécessaire adapté à la mise en place d'un implant dentaire suivant l'une quelconque des revendications précédentes **caractérisé en ce que** la longueur axiale de l'implant est comprise entre 3 et 7mm.

## Claims

1. Kit designed for fitting a dental implant in place, comprising:
- an implant (1) for anchoring in a bone structure (14), comprising a head (2) intended to support a dental prosthesis and a threaded root (4) of cylindrical substance, wherein the threaded root (4) has an internal cavity (10) and at least one lateral orifice (8) through which this internal cavity (10) opens out on the external lateral face of the root (4), the axial position of this orifice (8) being such that when the implant (1) is in position, this at least one orifice (8) opens out on a medullary zone (18) of the bone structure (14) .
- a biocompatible hardenable fluid (24);
- a device (20) for indicating the position of the lateral orifice of the implant comprising a removable tongue (20) which can be attached to the head of the implant.
- a hollow needle injection device with which, when the implant (1) is in place, it is possible to inject the biocompatible hardenable fluid (24) through the bone and into the internal cavity (10) of the implant through the lateral orifice.

2. Kit designed for fitting a dental implant in place according to Claim 1, **characterized in that** it additionally comprises:
- a spatula (32) which is retractable in a hollow needle (26).

3. Kit designed for fitting a dental implant in place according to either of Claims 1 or 2, **characterized in that** the hollow needle is made of a shape-memory metal, capable of changing from an initial straight shape to a curved shape.

4. Kit designed for fitting a dental implant in place according to either of Claims 1 to 3, **characterized in that** the internal cavity (10) of the implant has an axial orifice (12) at its distal end.

5. Kit designed for fitting a dental implant in place according to any one of the preceding claims, **characterized in that** this at least one lateral orifice (8) of the implant has an oval cross section, the main axis of this cross section extending in a plane perpendicular to the axis of the root (4) .

6. Kit designed for fitting a dental implant in place according to any one of the preceding claims, **characterized in that** the axial length of the implant is between 3 and 7 mm.

## Patentansprüche

1. Besteck zum Anbringen eines Zahnimplantats, welches Folgendes umfasst:
- ein Zahnimplantat (1) für die Verankerung an einer Knochenstruktur (14), umfassend einen Kopf (2), der eine Zahnprothese tragen soll, und eine im wesentlichen zylindrische, gewindete Wurzel (4), wobei die gewindete Wurzel (4) eine innere Höhlung (10) und mindestens eine seitliche Öffnung (8) aufweist, wodurch die innere Höhlung (10) auf die seitliche Außenfläche der Wurzel (4) mündet, und wobei die axiale Position dieser Öffnung (8) derart ist, dass, wenn sich das Implantat (1) an Ort und Stelle befindet, die mindestens eine Öffnung (8) in eine Markzone (18) der Knochenstruktur (14) mündet, wobei die Abmessungen dieser mindestens einen seitlichen Öffnung (8) die Einführung eines härtbaren Materials (24) durch eine Hohlnadel (22) in die innere Höhlung (10) gestatten;
- eine härtbare biologisch kompatible Flüssigkeit (24);
- eine Vorrichtung (20) zur Orientierung der seitlichen Öffnung des Implantats, umfassend einen abnehmbaren Zapfen (20), der mit dem Kopf des Implantats verbunden werden kann;
- eine Hohlnadel-Injektionsvorrichtung, die es gestattet, wenn sich das Implantat (1) an Ort und Stelle befindet, eine härtbare biologisch kompatible Flüssigkeit (24) durch den Knochen in die innere Höhlung (10) des Implantats durch die seitliche Öffnung zu injizieren.

2. Besteck zum Anbringen eines Zahnimplantats nach Anspruch 1, **dadurch gekennzeichnet, dass** es ferner Folgendes umfasst:
- einen in einer Hohlnadel (26) zurückziehbaren Spatel (32).

3. Besteck zum Anbringen eines Zahnimplantats nach einem der Ansprüche 1 oder 2, **dadurch gekennzeichnet, dass** die Hohlnadel aus einem Metall mit Formgedächtnis besteht, das von einer ursprünglichen geraden Form zu einer gekrümmten Form übergehen kann.

4. Besteck zum Anbringen eines Zahnimplantats nach einem der Ansprüche 1 bis 3, **dadurch gekennzeichnet, dass** die innere Höhlung (10) des Implantats eine axiale Öffnung (12) an ihrem distalen Ende besitzt.

5. Besteck zum Anbringen eines Zahnimplantats nach einem der vorstehenden Ansprüche, **dadurch gekennzeichnet, dass** diese mindestens eine seitliche Öffnung (8) des Implantats einen ovalen Querschnitt besitzt, wobei sich die große Achse des Querschnitts in einer Ebene senkrecht zur Achse der Wurzel (4) erstreckt.

6. Besteck zum Anbringen eines Zahnimplantats nach einem der vorstehenden Ansprüche, **dadurch gekennzeichnet, dass** die axiale Länge des Implantats zwischen 3 und 7 mm beträgt.
